# EUROPEAN PATENT APPLICATION

(11) **EP 4 819 738 A1**
(43) Date of publication of application: **07.10.2026**
(21) Application number: 23959896.4
(22) Date of filing: 30.11.2023
(51) Int. Cl.: H04W 72/23

(54) **WIRELESS COMMUNICATION METHODS AND APPARATUSES, DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: WU, Zuomin, Dongguan, Guangdong 523860 (CN)
(74) Representative: Mewburn Ellis LLP
(86) International application number: PCT/CN2023/135649
(87) International publication number: WO 2025/111983

(57) **Abstract**

A wireless communication method and apparatus, a device, and a storage medium are provided, which relate to the field of communication technology. The method includes the following. A terminal device determines a configuration of cell discontinuous transmission (DTX) and/or a configuration of cell discontinuous reception (DRX) on a first cell (510). The terminal device determines, according to first indication information, whether a resource in a non-active period of the cell DTX is available for transmission of a downlink common channel or signal, and/or determines, according to the first indication information, whether an uplink common resource in a non-active period of the cell DRX is available for transmission of an uplink channel or signal (520). By using the above method, in the non-active period of the cell DTX and/or the non-active period of the cell DRX, certain specific messages can still be timely transmitted. In a scenario of network energy saving, network communication performance can be improved.

## Description

### TECHNICAL FIELD

Embodiments of the disclosure relate to the field of communication technology, and in particular, to a wireless communication method and apparatus, a device, and a storage medium.

### BACKGROUND

In a new radio (NR) system, to achieve network energy saving, a network device may configure a configuration of cell discontinuous transmission (DTX) and/or a configuration of cell discontinuous reception (DRX) for a terminal device. In a non-active period of the cell DTX configured for the terminal device, the network device may not perform transmission of a specific downlink channel or signal, and/or the terminal device may not perform reception of the specific downlink channel or signal. In a non-active period of the cell DRX configured for the terminal device, the terminal device may not perform transmission of a specific uplink channel or signal, and/or the network device may not perform reception of the specific uplink channel or signal. In this manner, energy consumption of the network device can be reduced.

However, if the above scheme for energy saving is used, certain messages may be unable to be timely transmitted. For example, when system information (SI) in a network is updated, the terminal device will be unable to timely obtain updated SI in the non-active period of the cell DTX configured for the terminal device.

### SUMMARY

A wireless communication method and apparatus, a device, and a storage medium are provided in embodiments of the disclosure. The technical solutions provided in embodiments of the disclosure are as follows.

According to an aspect of embodiments of the disclosure, a wireless communication method is provided. The method is performed by a terminal device and includes the following. A configuration of cell discontinuous transmission (DTX) and/or a configuration of cell discontinuous reception (DRX) on a first cell are determined. Whether a resource in a non-active period of the cell DTX is available for transmission of a downlink common channel or signal is determined according to first indication information, and/or whether an uplink common resource in a non-active period of the cell DRX is available for transmission of an uplink channel or signal is determined according to the first indication information.

According to an aspect of embodiments of the disclosure, a wireless communication method is provided. The method is performed by a network device and includes the following. A configuration of cell DTX and/or a configuration of cell DRX on a first cell are configured. First indication information is sent, where the first indication information is used by a terminal device for determining whether a resource in a non-active period of the cell DTX is available for transmission of a downlink common channel or signal and/or determining whether an uplink common resource in a non-active period of the cell DRX is available for transmission of an uplink channel or signal.

According to an aspect of embodiments of the disclosure, a wireless communication apparatus is provided. The apparatus includes a processing module. The processing module is configured to determine a configuration of cell DTX and/or a configuration of cell DRX on a first cell. The processing module is further configured to determine, according to first indication information, whether a resource in a non-active period of the cell DTX is available for transmission of a downlink common channel or signal, and/or determine, according to the first indication information, whether an uplink common resource in a non-active period of the cell DRX is available for transmission of an uplink channel or signal.

According to an aspect of embodiments of the disclosure, a wireless communication apparatus is provided. The apparatus includes a processing module and a sending module. The processing module is configured to configure a configuration of cell DTX and/or a configuration of cell DRX on a first cell. The sending module is configured to send first indication information, where the first indication information is used by a terminal device for determining whether a resource in a non-active period of the cell DTX is available for transmission of a downlink common channel or signal and/or determining whether an uplink common resource in a non-active period of the cell DRX is available for transmission of an uplink channel or signal.

According to an aspect of embodiments of the disclosure, a communication device is provided. The communication device includes a processor and a memory. The memory is configured to store a computer program. The processor is configured to execute the computer program to implement the above wireless communication method at a terminal device side or the above wireless communication method at a network device side.

According to an aspect of embodiments of the disclosure, a computer-readable storage medium is provided. The storage medium is configured to store a computer program which is executed by a processor to implement the above wireless communication method at a terminal device side or the above wireless communication method at a network device side.

According to an aspect of embodiments of the disclosure, a chip is provided. The chip includes programmable logic circuits and/or program instructions. The chip is configured to, when running, implement the above wireless communication method at a terminal device side or the above wireless communication method at a network device side.

According to an aspect of embodiments of the disclosure, a computer program product is provided. The computer program product includes computer instructions which are stored in a computer-readable storage medium. The computer instructions are configured to be read by a processor from the computer-readable storage medium to execute the computer instructions to implement the above wireless communication method at a terminal device side or the above wireless communication method at a network device side.

The technical solutions provided in embodiments of the disclosure have the following beneficial effects.

After determining a configuration of cell DTX and/or a configuration of cell DRX on a first cell, a terminal device determines, according to first indication information, whether a resource in a non-active period of the cell DTX is available for transmission of a downlink common channel or signal, and/or determines, according to the first indication information, whether an uplink common resource in a non-active period of the cell DRX is available for transmission of an uplink channel or signal. As such, in the non-active period of the cell DTX and/or the non-active period of the cell DRX, certain specific messages can still be timely transmitted. In a scenario of network energy saving, network communication performance can be improved.

### BRIEF DESCRIPTION OF THE DRAWINGS

FIG. 1 is a schematic diagram of an architecture of a communication system provided in embodiments of the disclosure.
FIG. 2 is another schematic diagram of an architecture of a communication system provided in embodiments of the disclosure.
FIG. 3 is another schematic diagram of an architecture of a communication system provided in embodiments of the disclosure.
FIG. 4 is a schematic diagram illustrating activation or de-activation of cell discontinuous reception (DRX) on a second cell through downlink control information (DCI) signaling provided in an embodiment of the disclosure.
FIG. 5 is a flowchart of a wireless communication method provided in an embodiment of the disclosure.
FIG. 6 is a schematic diagram illustrating transmission of system information (SI) upon activation of cell discontinuous transmission (DTX) provided in an embodiment of the disclosure.
FIG. 7 is a schematic diagram illustrating change in a transmission status of SI provided in an embodiment of the disclosure.
FIG. 8 is a flowchart of a wireless communication method provided in another embodiment of the disclosure.
FIG. 9 is a block diagram of a wireless communication apparatus provided in an embodiment of the disclosure.
FIG. 10 is a block diagram of a wireless communication apparatus provided in another embodiment of the disclosure.
FIG. 11 is a schematic structural diagram of a terminal device provided in an embodiment of the disclosure.
FIG. 12 is a schematic structural diagram of a network device provided in an embodiment of the disclosure.

### DETAILED DESCRIPTION

In order to make the objectives, technical solutions, and advantages of the disclosure clearer, embodiments of the disclosure will be described in further detail below with reference to the accompanying drawings.

The network architecture and service scenario described in embodiments of the disclosure are intended to describe the technical solutions of embodiments of the disclosure more clearly, and do not constitute limitation on the technical solutions provided in embodiments of the disclosure. Those of ordinary skill in the art can appreciate that, with evolution of network architectures and emergence of new service scenarios, for similar technical problems, the technical solutions provided in embodiments of the disclosure are also applicable.

The technical solutions of embodiments of the disclosure may be applied to various communication systems, for example, a global system of mobile communication (GSM), a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (WiFi), a 5th-generation (5G) system, a beyond 5G (B5G) system, a 6th-generation (6G) system, or other communication systems.

Generally, a conventional communication system supports a limited quantity of connections and therefore is easy to implement. However, with development of communication technology, a mobile communication system will not only support conventional communication but also support, for example, device to device (D2D) communication, machine to machine (M2M) communication, machine type communication (MTC), vehicle to vehicle (V2V) communication, or vehicle to everything (V2X) communication, etc. Embodiments of the disclosure can also be applied to these communication systems.

The communication system in embodiments of the disclosure may be applied to a carrier aggregation (CA) scenario, or may be applied to a dual connectivity (DC) scenario, or may be applied to a standalone (SA) network deployment scenario.

The communication system in embodiments of the disclosure is applicable to an unlicensed spectrum, and an unlicensed spectrum may be regarded as a shared spectrum. Alternatively, the communication system in embodiments of the disclosure is applicable to a licensed spectrum, and a licensed spectrum may be regarded as a non-shared spectrum.

The embodiments of the disclosure may be applied to an NTN system, or may be applied to a terrestrial network (TN) system. An NTN generally provides a communication service for a terrestrial user by means of satellite communication. Currently, NTN systems include NR-NTN and Internet of things (IoT)-NTN systems, and may include other NTN systems in the future.

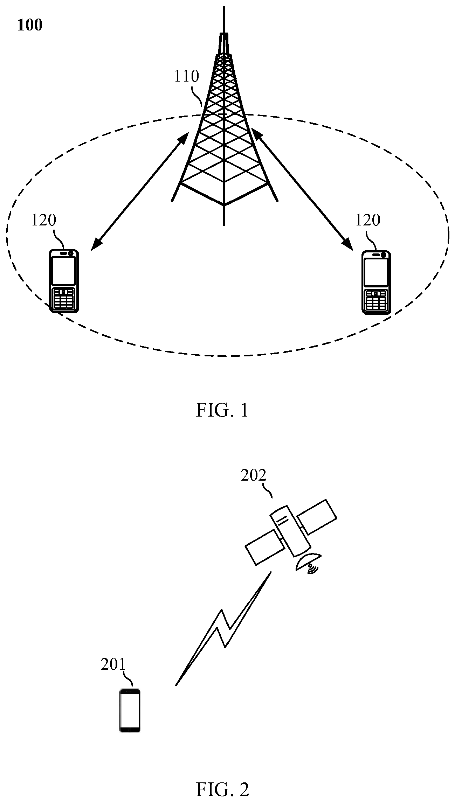

Exemplarily, FIG. 1 is a schematic diagram of an architecture of a communication system provided in embodiments of the disclosure. As illustrated in FIG. 1, the communication system 100 may include a network device 110. The network device 110 may be a device that communicates with a terminal device 120. The network device 110 may provide communication coverage for a specific geographical region and may communicate with terminal devices within the coverage.

FIG. 1 exemplarily illustrates one network device 110 and two terminal devices 120. In some embodiments of the disclosure, the communication system 100 may include multiple network devices and there may be other numbers of terminal devices in the coverage of each network device, which is not limited in embodiments of the disclosure.

Exemplarily, FIG. 2 is another schematic diagram of an architecture of a communication system provided in embodiments of the disclosure. As illustrated in FIG. 2, the communication system may include a terminal device 201 and a satellite 202, and wireless communication can be performed between the terminal device 201 and the satellite 202. A network formed between the terminal device 201 and the satellite 202 may also be referred to as an NTN. In the architecture of the communication system illustrated in FIG. 2, the satellite 202 can function as a base station, and the terminal device 201 and the satellite 202 can communicate with each other directly. In the system architecture, the satellite 202 may be referred to as a network device. In some embodiments of the disclosure, the communication system may include multiple satellites 202, and there may be other numbers of terminal devices in the coverage of each network satellite 202, which is not limited in embodiments of the disclosure.

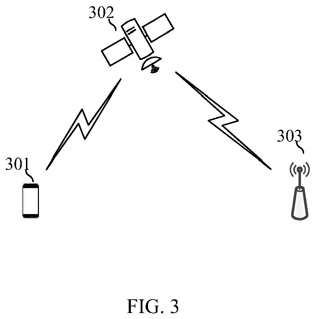

Exemplarily, FIG. 3 is another schematic diagram of an architecture of a communication system provided in embodiments of the disclosure. As illustrated in FIG. 3, the communication system includes a terminal device 301, a satellite 302, and a base station 303. Wireless communication can be performed between the terminal device 301 and the satellite 302, and communication can be performed between the satellite 302 and the base station 303. A network formed between the terminal device 301, the satellite 302, and the base station 303 may also be referred to as an NTN. In the architecture of the communication system illustrated in FIG. 3, the satellite 302 may not function as a base station, and the communication between the terminal device 301 and the base station 303 needs to be relayed via the satellite 302. In the system architecture, the base station 303 may be referred to as a network device. In some embodiments of the disclosure, the communication system may include multiple base stations 303, each base station 303 may communication with one or more satellites 302, and there may be other numbers of terminal devices in the coverage of each satellite 302, which is not limited in embodiments of the disclosure.

In the future evolved communication systems such as B5G or 6G, there may be distributed multiple-input multiple-output (distributed MIMO, also referred to as distributed antenna system) and/or massive multiple-input multiple-output (massive MIMO, also referred to as massive antenna matrix system) scenarios. In some cases, distributed MIMO and/or massive MIMO may also support cell-free or UE-centric network deployments. It may be understood that, the above scenarios are also applicable to TN and/or NTN.

The terminal device mentioned in embodiments of the disclosure may refer to a user equipment (UE), an access terminal, a subscriber unit, a subscriber station, a mobile station, a remote station, a remote terminal, a mobile device, a wireless communication device, a user agent, or a user device. Optionally, the terminal device 10 may also be a cellular telephone, a cordless telephone, a session initiation protocol (SIP) telephone, a wireless local loop (WLL) station, a personal digital assistant (PDA), various devices having wireless communication functions such as a handheld device, a computing device, or other processing devices connected to a wireless modem, an in-vehicle device, or a wearable device, a terminal device in a 5G system (5GS) or a terminal device in a future evolved public land mobile network (PLMN), etc., and embodiments of the disclosure are not limited in this regard. For the convenience of illustration, the above devices are collectively referred to as "terminal device". In embodiments of the disclosure, the terms "terminal device" and "UE" are usually used interchangeably, but it may be understood by those skilled in the art that the two can express the same meaning.

The network device mentioned in embodiments of the disclosure may be an access-network device, which may be located on the ground or satellite. The access-network device is a device deployed in an access network to provide wireless communication functions for the terminal device. The access-network device may include various forms of macro base stations, micro base stations, relay stations, access points, etc. The names of a device having functions of the access-network device may be different in systems adopting different radio access technologies, which is, for example, referred to as a gNodeB or a gNB in a 5G NR system. With evolution of communication technology, the name "access-network device" may change. For the convenience of illustration, in embodiments of the disclosure, the above apparatus for providing wireless communication functions for the terminal device is collectively called "access-network device". Optionally, a communication relationship may be established between the terminal device and a core-network device via the access-network device.

The "5G NR system" in embodiments of the disclosure may also be referred to as "5G system" or "NR system", but the meaning thereof can be understood by those skilled in the art. The technical solutions described in embodiments of the disclosure may be applied to an LTE system, or may be applied to a 5G NR system, or may be applied to a future evolved system (for example, a B5G system or 6G system) of a 5G NR system, or may be applied to other communication systems such as a narrow band Internet of things (NB-IoT) system, and the disclosure is not limited in this regard.

In embodiments of the disclosure, the network device can serve a cell, and the terminal device communicates with the network device over a transmission resource (for example, a frequency-domain resource, or referred to as spectrum resource) on a carrier used by the cell. The cell may be a cell corresponding to the network device (for example, a base station). The cell may belong to a macro base station, or may belong to a base station corresponding to a small cell. The small cell herein may include a metro cell, a micro cell, a pico cell, a femto cell, etc. These small cells are characterized by small coverage and low transmission power and are adapted to provide data transmission service with high-rate.

Before the technical solutions of the disclosure are introduced, the related art involved in the disclosure will be described. The related art below, as an optional scheme, can be arbitrarily combined with the technical solutions of embodiments of the disclosure, which shall all belong to the protection scope of embodiments of the disclosure. The embodiments of the disclosure include at least part of the following contents.

### 1. Network energy saving

Network energy saving is of great significance to environmental sustainability, reduction of an impact on the environment (reduction of greenhouse gas emissions), and operational expenditure (OPEX) saving. With gradual popularization of 5G in various industrial and geographical regions, a very high data transmission rate needs to be supported to handle a more advanced service and application (such as extended reality (XR)). As a result, network deployments become denser, and consequently more antennas, larger bandwidths, and more frequency bands are used. Considering an impact of the 5G on the environment, it is necessary to develop a controlled and new solution to enhance the network energy saving.

Energy consumption has become a key part of an OPEX of an operator. As indicated by a report by the global system for mobile communications association (GSMA), energy cost of a mobile network accounts for approximately 23% of a total OPEX. Most of the energy consumption comes from a radio access network (RAN), and more specifically, from an active antenna unit (AAU). Only a small portion of the energy consumption comes from a data center and fiber optic transmission. Power consumption of one radio access may be divided into two parts: a dynamic part and a static part. The dynamic part includes only power consumption when data is being transmitted or received, and the static part includes power consumption for maintaining necessary operation of a radio access device at all times, including power consumption when no data is being transmitted or received.

Therefore, based on the above objectives, it is necessary to study and develop a network energy consumption model, a key performance indicator (KPI), an evaluation method, and the like at a network device side to determine and study a network energy-saving technology in a target deployment scenario. A defined power consumption model at a terminal device side may serve as reference. This study should focus on how to achieve more effective dynamic operation and/or semi-static operation, as well as achieve finer-grained data transmission and/or reception adaptation by considering one or more network energy-saving technologies applied to the time domain, frequency domain, spatial domain, and power domain, in conjunction with potential feedback support of a terminal device, potential auxiliary information of the terminal device, and technologies such as information exchange or coordination between network interfaces.

It is worth noting that this study not only evaluates a potential network energy-saving gain, but also needs to evaluate and balance an impact on the network and user performance by observing KPIs such as spectrum efficiency, capability, user perceived throughput (UPT), delay, UE power consumption, complexity, handover performance, call drop rate, initial access performance, and KPI related to service level agreement (SLA) security. This study should avoid exerting a significant impact on the above KPIs.

### 2. Transmission of system information (SI) in NR system

In an NR system, an initial access procedure of a terminal device may be completed by detecting a synchronization signal (SS)/physical broadcast channel (PBCH) block (SSB) on a sync raster. In the initial access procedure, the terminal device attempts to search for an SSB according to pre-defined possible time-frequency positions of SSBs, and uses the detected SSB to obtain time and frequency synchronization, radio frame timing, and a cell identifier (ID).

After the SSB is detected by the terminal device, the terminal device may determine a configuration of a Type0-physical downlink control channel common search space (Type0-PDCCH CSS) set according to a master information block (MIB) in the SSB. By monitoring the Type0-PDCCH CSS set, the terminal device may receive scheduling of a system information block 1 (SIB1) message by a network device. Both an MIB message and the SIB1 message include system configuration information of a serving cell. Further, the terminal device may receive, by monitoring a Type0A-PDCCH CSS set, scheduling of other SI except the SIB1 message by the network device, may receive, by monitoring a Type2-PDCCH CSS set, scheduling of a paging message by the network device, and may receive, by monitoring a Type2A-PDCCH CSS set, paging early indication (PEI) information sent by the network device.

The terminal device may also obtain a resource configuration of a physical random access channel (PRACH) transmission occasion (RO) in a random access procedure according to received SI SIB1 of a cell. The terminal device may request transmission of SI from the network device according to an RO resource configured by the network device. The SI requested by the terminal device from the network device may be other SI except SIB1, for example, SIB2, SIB3, SIB4, SIB5, SIB6, SIB7, SIB8, SIB9, SIB10, SIB11, SIB12, SIB13, SIB14, SIB15, SIB16, SIB17, SIB18, SIB19, SIB20, SIB21, and the like.

### 3. Configuration of cell discontinuous transmission (DTX) and/or configuration of cell discontinuous reception (DRX) in NR system

In an NR system, to achieve network energy saving, a network device may configure a configuration of cell DTX and/or a configuration of cell DRX for a terminal device. In a non-active period of the cell DTX configured for the terminal device, the network device may not perform transmission of a specific downlink channel or signal, and/or the terminal device may not perform reception of the specific downlink channel or signal. In a non-active period of the cell DRX configured for the terminal device, the terminal device may not perform transmission of a specific downlink channel or signal, and/or the network device may not perform reception of the specific uplink channel or signal. In this manner, energy consumption of the network device can be reduced.

Currently, the network device may configure the cell DTX and the cell DRX independently, or may configure both the cell DTX and the cell DRX at once. The configuration of the cell DTX and/or the configuration of the cell DRX may be configured to be valid through radio resource control (RRC) signaling, or may be activated or de-activated through downlink control information (DCI) signaling. The DCI signaling is carried in DCI format 2_9.

Validity time of DCI format 2_9 is determined as follows. In the case where the configuration of the cell DTX and/or the configuration of the cell DRX are activated or de-activated through the DCI signaling, if DCI format 2_9 indicating to change an activation or de-activation state of cell DTX and/or cell DRX on a second cell is received by the terminal device in a slot *m* on an active downlink bandwidth part (BWP) of a first cell, then the terminal device may start to activate or de-activate the cell DTX and/or the cell DRX from a first slot on an active downlink BWP and/or an active uplink BWP of the second cell according to this indication information. The first slot is not earlier than a start position of a slot *m+d* on the active downlink BWP of the first cell, where *d* is the number (quantity) of slots determined according to a subcarrier spacing (SCS) of the active downlink BWP of the first cell, and the value of *d* is illustrated in table 1 below.

**Table 1: value of d**

| SCS (kHz) | Number of slots (*d*) |
|---|---|
| 15 | 3 |
| 30 | 6 |
| 60 | 12 |
| 120 | 24 |
| 480 | 96 |
| 960 | 192 |

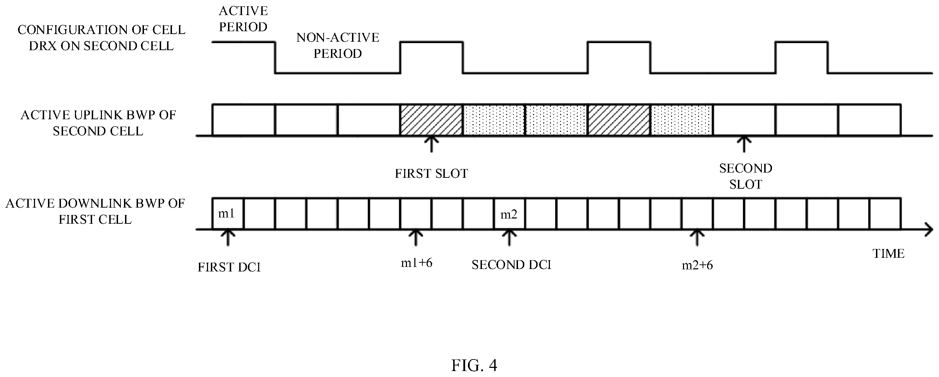

As an example, the second cell for the terminal device is configured with cell DRX in an inactive state. When first DCI corresponding to DCI format 2_9 is received by the terminal device in a slot *m*1 on the active downlink BWP of the first cell, and the first DCI indicates that the cell DRX on the second cell is to be activated, the terminal device starts to activate the cell DRX from a first slot on the active uplink BWP of the second cell according to this indication information, where the first slot is not earlier than a start position of a slot *m*1*+d* on the active downlink BWP of the first cell. When second DCI corresponding to DCI format 2_9 is received by the terminal device in a slot *m*2 on the active downlink BWP of the first cell, and the second DCI indicates that the cell DRX on the second cell is to be de-activated, the terminal device starts to de-activate the cell DRX from a second slot on the active uplink BWP of the second cell according to this indication information, where the second slot is not earlier than a start position of a slot *m*2*+d* on the active downlink BWP of the first cell. FIG. 4 provides a schematic diagram illustrating activation or de-activation of the cell DRX on the second cell through the DCI signaling described above. In FIG. 4, it is assumed that an SCS of an active downlink BWP of a first cell is 30 kHz, that is, the value of *d* is 6, and an SCS of an active uplink BWP of the second cell is 15 kHz. It may be noted that, the first cell may be the same as or different from the second cell.

### 4. Paging mechanism in NR system

For paging in an NR system, there are mainly three application scenarios, which respectively correspond to three paging messages, namely paging initiated by a core network, paging initiated by a gNB, and notification of an SI update initiated by the gNB. The notification of the SI update initiated by the gNB is referred to as short messages in an RRC protocol. PDCCH channels of these three paging messages are scrambled with a public paging ID, i.e., paging-radio network temporary identifier (P-RNTI), configured in a cell. The comparison of these three paging messages are illustrated in table 2.

**Table 2**

| Paging type | Paging range | Related state | ID of convolution |
|---|---|---|---|
| Paging initiated by a core network | Tracking area | RRC_IDLE (RRC idle state) | P-RNTI |
| Paging initiated by a gNB | Notification area | RRC_INACTIVE (RRC inactive state) | P-RNTI |
| Short messages | Cell | RRC_IDLE, RRC_INACTIVE, RRC_CONNECTED (RRC connected) | P-RNTI |

On a primary cell, a terminal device monitors, according to DCI format 1_0 with cyclic redundancy check (CRC) scrambled by P-RNTI, a Type2-PDCCH CSS set configured in a paging search space, so as to receive scheduling of a paging message by a network device. The short message is RRC information contained in the DCI format 1_0 with CRC scrambled by P-RNTI. Specifically, the DCI format 1_0 with CRC scrambled by P-RNTI contains two information fields related to the short message, where one is a short message indicator field and the other is a short message field. The short message indication field includes 2 bits indicating information illustrated in table 3, and the short message field includes 8 bits indicating information illustrated in table 4. If only scheduling information of the paging message, and tracking reference signal (TRS) availability indication if TRS is configured, are present in DCI, the short message field is reserved.

**Table 3**

| Bit field | Short message indicator |
|---|---|
| 00 | Reserved |
| 01 | Only scheduling information of a paging message, and TRS availability indication if TRS is configured, are present in DCI |
| 10 | Only a short message, and TRS availability indication if TRS is configured, are present in DCI |
| 11 | Scheduling information of a paging message, a short message, and TRS availability indication if TRS is configured, are present in DCI |

**Table 4**

| Bit | Short message |
|---|---|
| 1 | Trigger updates of other SI except earthquake and tsunami warning system (ETWS)/commercial mobile alert service (CMAS) messages (SIB6, SIB7, and SIB8) |
| 2 | Trigger updates of ETWS/CMAS messages (SIB6, SIB7, and SIB8). |
| 3 | Stop monitoring a paging message |
| 4 | Trigger updates of other SI except ETWS/CMAS messages (SIB6, SIB7, and SIB8), in a case of a terminal device using idle-state extended DRX (eDRX) cycle longer than a broadcast |
| | control channel (BCCH) update period |
| 5-8 | Reserved |

For the paging initiated by the core network and the paging initiated by the gNB, the basic principle of a transmission mechanism for the paging message is the same. From the perspective of the network, the paging message is transmitted in each paging occasion (PO) within an SI update period. From the perspective of the terminal device, a UE monitors only one PO per DRX cycle. Each UE calculates a paging frame (PF) and a PO according to its own UE ID and DRX cycle, that is, each PO is only associated with some specific UEs, instead of being shared by all UEs. Since the UE only needs to monitor a PO of the UE, this PO-based grouping mechanism can reduce a rate of false alarms for paging between different POs.

A PO is a group of PDCCH monitoring occasions and consists of multiple time units (for example, subframes, slots, or symbols), which may be used for transmission of paging DCI. A PF is a radio frame, which may contain one or more POs or a start position of one PO.

### 5. Paging mechanism enhancement in NR system

Power consumption of terminal devices in RRC_IDLE and RRC_INACTIVE states mainly results from periodic DRX paging. To reduce power consumption during paging reception, an energy-saving signal for paging reception is introduced, referred to as PEI, which indicates whether the terminal device needs to receive paging in a PO before arrival of the PO of the terminal device.

For the PEI, the concept of subgrouping is introduced in one PO on the basis of existing PO-based grouping. When only UEs in part of subgroups are paged, UEs in other subgroups do not need to wake up to receive paging, thereby achieving power saving for the terminal. The division into subgroups supports UE ID-based grouping and network-allocated grouping. The UE ID-based grouping is similar to calculating the PO based on the UE ID. For example, SI broadcasts the maximum number of groups in each PO, and information of a group to which the terminal device belongs in this PO may be obtained through related operations such as a modulo operation of the UE ID on this maximum number of groups. In the network-allocated grouping solution, the terminal device directly obtains grouping information from the network.

On a primary cell, the terminal device monitors, according to DCI format 2_7 with CRC scrambled by PEI-RNTI, a Type2A-PDCCH CSS set configured in a PEI search space (*Pei-Search Space*), so as to receive a PEI message from a network device. A paging indication field in DCI format 2_7 includes *NPO***NSG* bits, where *NPO* is the number of POs configured by a higher-layer parameter *po-NumPerPEI*, and *NSG* is the number of subgroups in one PO configured by a higher-layer parameter *subgroupsNumPerPO*. Each bit indicates one terminal subgroup in one PO. The maximum number of subgroups in one PO is 8.

The function of the PEI is to indicate whether terminal devices in RRC_IDLE and RRC_INACTIVE states need to monitor paging. When a terminal group or a terminal subgroup needs to monitor paging, the PEI indicates the terminal device to monitor a PO. If no PEI associated with the PO is detected, the terminal does not need to monitor the PO. The network device may provide PEI configuration information through SI.

A UE monitors only one PEI occasion (PEI-O) per DRX cycle. A PEI monitoring occasion (also referred to as PEI-O) is a set of multiple PDCCH monitoring occasions. A PEI monitoring occasion is a group of PDCCH monitoring occasions and consists of multiple time units (for example, subframes, slots, or symbols), which may be used for transmission of the PEI. In multi-beam operations, since the UE assumes that the same PEI is repeated in all transmitted beams, how to select a beam for reception of the PEI depends on UE implementation.

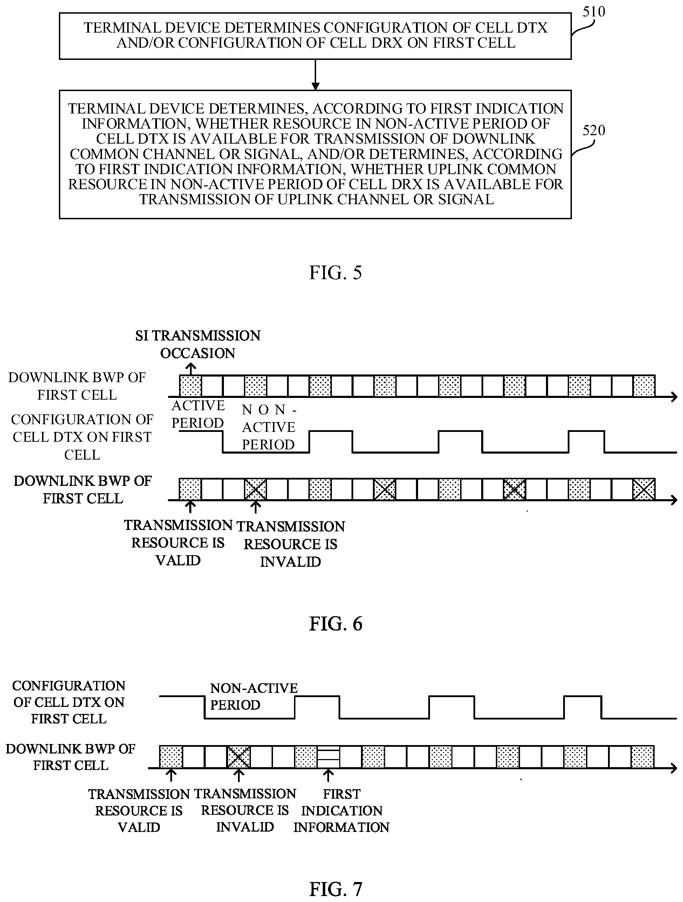

Reference is made to FIG. 5 which is a flowchart of a wireless communication method provided in an embodiment of the disclosure. An execution body of each operation in the method is a terminal device. The method may include at least one of operations at 510 and 520.

At 510, a terminal device determines a configuration of cell DTX and/or a configuration of cell DRX on a first cell.

In some embodiments, the terminal device determines the configuration of the cell DTX and/or the configuration of the cell DRX on the first cell according to SI.

In some embodiments, a network device corresponding to the first cell sends first configuration information, and the terminal device receives the first configuration information. The first configuration information is used for configuring the configuration of the cell DTX and/or the configuration of the cell DRX on the first cell.

It may be understood that, a terminal device in an RRC idle state or inactive state also needs to monitor or receive a downlink common channel or signal on the first cell, and thus also needs to obtain the first configuration information for configuring the cell DTX. To enable the terminal device in the idle state or inactive state to also receive the first configuration information, the first configuration information needs to be carried in the SI.

At 520, the terminal device determines, according to first indication information, whether a resource in a non-active period of the cell DTX is available for transmission of a downlink common channel or signal, and/or determines, according to the first indication information, whether an uplink common resource in a non-active period of the cell DRX is available for transmission of an uplink channel or signal.

In some embodiments, the first indication information indicates that the cell DTX and/or the cell DRX is to be activated or de-activated. The first indication information includes a first bit and/or a second bit.

In some embodiments, after the cell DTX on the first cell is activated, in the non-active period of the cell DTX, the network device does not perform transmission of a specific downlink channel or signal, and/or the terminal device does not perform reception of the specific downlink channel or signal.

Reference is made to FIG. 6 which is a schematic diagram illustrating transmission of SI upon activation of cell DTX provided in an embodiment of the disclosure. In this embodiment, resources for periodic transmission of the SI are included in a downlink BWP of a first cell. Upon configuration or activation of the cell DTX on the first cell, a resource(s) for transmission of the SI in an active period of the cell DTX is valid, and a resource(s) for transmission of the SI in a non-active period of the cell DTX is invalid.

In some embodiments, after the cell DTX on the first cell is de-activated, in the non-active period of the cell DTX, the network device may perform transmission of a specific downlink channel or signal, and/or the terminal device may perform reception of the specific downlink channel or signal.

In some embodiments, after the cell DRX on the first cell is activated, in the non-active period of the cell DRX, the terminal device does not perform transmission of a specific uplink channel or signal, and/or the network device does not perform reception of the specific uplink channel or signal.

In some embodiments, after the cell DRX on the first cell is de-activated, in the non-active period of the cell DRX, the terminal device may perform transmission of a specific uplink channel or signal, and/or the network device may perform reception of the specific uplink channel or signal.

In some embodiments, the first indication information includes the first bit and the second bit. When the cell DTX is configured, the first bit indicates that the cell DTX is to be activated or de-activated. When the cell DRX is configured, the second bit indicates that the cell DRX is to be activated or de-activated.

In the above method, by setting two bits, namely the first bit and the second bit, activation of the cell DTX and activation of the cell DRX can be separately controlled.

In some embodiments, the first indication information includes the first bit and the second bit. When only the cell DTX is configured, the first bit indicates that the cell DTX is to be activated or de-activated. When only the cell DRX is configured, the first bit indicates that the cell DRX is to be activated or de-activated. When both the cell DTX and the cell DRX are configured, the first bit indicates that the cell DTX is to be activated or de-activated, and the second bit indicates that the cell DRX is to be activated or de-activated.

In the above method, only when both the cell DTX and the cell DRX are configured, both the first bit and the second bit are used, thereby reducing data redundancy while controlling activation of the cell DTX and activation of the cell DRX separately.

In some embodiments, the first indication information includes the first bit. When only the cell DTX is configured, the first bit indicates that the cell DTX is to be activated or de-activated. When only the cell DRX is configured, the first bit indicates that the cell DRX is to be activated or de-activated. When both the cell DTX and the cell DRX are configured, the first bit indicates that the cell DTX and the cell DRX are to be activated or de-activated.

In the above method, by using one bit, namely the first bit, the unified management of activation of the cell DTX and the cell DRX can be achieved, thereby achieving low data redundancy and saving transmission resources.

In some embodiments, the first indication information is carried in a first PDCCH format, the first PDCCH format is scrambled by a first RNTI, and the first RNTI is configured by a network device.

That is, CRC for the first PDCCH format is scrambled by the first RNTI.

In some embodiments, the network device described above corresponds to the first cell.

In some embodiments, the network device described above corresponds to another cell, such as a second cell, except the first cell.

The first RNTI may be any type of RNTI configured by the network device. PDCCHs in different formats are scrambled by different types of RNTI.

In some embodiments, the first PDCCH format is transmitted through a first CSS set, the first CSS set is configured by the network device.

The first CSS set may be any CSS set configured by the network device.

In some embodiments, the terminal device monitors, through a first CSS set, the first PDCCH format in the non-active period of the cell DTX.

In some embodiments, the terminal device may obtain the first indication information by monitoring the first PDCCH format.

In some embodiments, the terminal device skips monitoring of the first PDCCH format in the non-active period of the cell DTX.

In some embodiments, the terminal device may obtain the first indication information by monitoring a PDCCH format(s) other than the first PDCCH format.

Since transmission of a paging-related message is not affected by network energy-saving configuration (for example, the configuration of the cell DTX, etc.), a downlink channel or signal associated with the transmission of the paging-related message may be enhanced, thereby enabling the terminal device to know whether the network device uses a time-domain resource in the non-active period of the cell DTX for transmission of the downlink common channel or signal.

In some embodiments, the first indication information is carried in a second PDCCH format, the second PDCCH format is scrambled by a P-RNTI, and the P-RNTI is an RNTI for scheduling of a paging message.

That is, CRC for the second PDCCH format is scrambled by the P-RNTI.

In some embodiments, the second PDCCH format is transmitted through a second CSS set. The second CSS set includes CSS that can be used for transmission of a PDCCH format scrambled by the P-RNTI. For example, the second CSS set may include Type2-PDCCH CSS configured by the network device.

In some embodiments, the terminal device monitors, through a second CSS set, the second PDCCH format in the non-active period of the cell DTX.

In some embodiments, the terminal device may obtain the first indication information by monitoring the second PDCCH format.

In some embodiments, the first indication information is a separate information field in the second PDCCH format.

In some embodiments, there are still reserved bits in the second PDCCH format (for example, DCI format 1_0 scrambled by the P-RNTI), and thus a new information field may be added in the second PDCCH format to serve as the above separate information field.

In some embodiments, an information field in the second PDCCH format is reused for the first indication information.

In some embodiments, a short message indicator field or a short message field in the second PDCCH format is reused for the first indication information.

In some embodiments, at least one bit in the first indication information is carried in a short message field in the second PDCCH format.

In some embodiments, when a short message indicator field in the second PDCCH format indicates that a short message is present in the second PDCCH format, at least one bit in the first indication information is carried in a short message field in the second PDCCH format.

Exemplarily, when the short message indicator field in the second PDCCH format indicates "10" or "11", the first indication information includes bit 5 and/or bit 6 in the short message field.

In some embodiments, the terminal device determines, based on configuration information of a network device, at least one bit in the first indication information to be carried in a short message field in the second PDCCH format.

In some embodiments, the first bit is bit 5 in the short message field.

In some embodiments, when the cell DTX is configured, this bit 5 indicates that the cell DTX is to be activated or de-activated.

In some embodiments, the second bit is bit 6 in the short message field.

In some embodiments, when the cell DRX is configured, this bit 6 indicates that the cell DRX is to be activated or de-activated.

Exemplarily, when only the cell DTX is configured, the first indication information includes bit 5 in the short message indicator field, where this bit 5 indicates that the cell DTX is to be activated or de-activated. Alternatively, when only the cell DRX is configured, the first indication information includes bit 5 in the short message indicator field, where this bit 5 indicates that the cell DRX is to be activated or de-activated. Alternatively, when both the cell DTX and the cell DRX are configured, the first indication information includes bit 5 and bit 6 in the short message indicator field, where this bit 5 indicates that the cell DTX is to be activated or de-activated, and this bit 6 indicates that the cell DRX is to be activated or de-activated.

Exemplarily, the first indication information includes bit 5 in the short message indicator field. When only the cell DTX is configured, this bit 5 indicates that the cell DTX is to be activated or de-activated. Alternatively, when only the cell DRX is configured, this bit 5 indicates that the cell DRX is to be activated or de-activated. Alternatively, when both the cell DTX and the cell DRX are configured, this bit 5 indicates that both the cell DTX and the cell DRX are to be activated or de-activated.

In addition, it may be noted that, the first bit being bit 5 in the short message field and the second bit being bit 6 in the short message field is merely taken as a possible implementation of the disclosure. In some embodiments, the first bit may be bit 6 in the short message field, and the second bit may be bit 5 in the short message field. Alternatively, the first bit and the second bit may be other reserved bits such as bit 7 and bit 8 in the short message field.

In some embodiments, the first indication information is carried in a third PDCCH format, the third PDCCH format is scrambled by a PEI-RNTI, and the PEI-RNTI is an RNTI for early indication of a paging message.

That is, CRC for the third PDCCH format is scrambled by the PEI-RNTI.

In some embodiments, the third PDCCH format is transmitted through a third CSS set. The third CSS set includes CSS that can be used for transmission of a PDCCH format scrambled by the PEI-RNTI. For example, the third CSS set may include Type2A-PDCCH CSS configured by the network device.

In some embodiments, the terminal device monitors, through a third CSS set, the third PDCCH format in the non-active period of the cell DTX.

In some embodiments, the terminal device may obtain the first indication information by monitoring the third PDCCH format.

In some embodiments, a position of a start bit in the first indication information in the third PDCCH format is configured by a network device.

In some embodiments, the first indication information is a separate information field in the third PDCCH format. That is, there are still reserved bits in the third PDCCH format (for example, a DCI format scrambled by the PEI-RNTI), and thus a new information field may be added in the third PDCCH format to serve as the above separate information field.

In some embodiments, an information field in the third PDCCH format is reused for the first indication information. Exemplarily, a paging indication field in the third PDCCH format is reused for the first indication information. For example, when the paging indication field in the third PDCCH format indicates that all preset values are "1", it indicates that a time-domain resource in the non-active period of the cell DTX is available for transmission of the downlink common channel or signal.

In some embodiments, if the first indication information indicates that the cell DTX is to be activated, the terminal device determines that the resource in the non-active period of the cell DTX is unavailable for transmission of the downlink common channel or signal.

In some embodiments, if the first indication information indicates that the cell DTX is to be de-activated, the terminal device determines that the resource in the non-active period of the cell DTX is available for transmission of the downlink common channel or signal.

In some embodiments, if the first indication information indicates that the cell DRX is to be activated, the terminal device determines that the uplink common resource in the non-active period of the cell DRX is unavailable for transmission of the uplink channel or signal.

In some embodiments, if the first indication information indicates that the cell DRX is to be de-activated, the terminal device determines that the uplink common resource in the non-active period of the cell DRX is available for transmission of the uplink channel or signal.

In some embodiments, if the terminal device receives no first indication information, the terminal device determines that the resource in the non-active period of the cell DTX is unavailable for transmission of the downlink common channel or signal, and/or determines that the uplink common resource in the non-active period of the cell DRX is unavailable for transmission of the uplink channel or signal.

It may be understood that, when the terminal device receives no first indication information, a behavior of the terminal device needs to be specified. In the above method, when the terminal device receives no first indication information, the terminal device may directly determine that a transmission resource in a non-active period is unavailable, thereby avoiding unnecessary data processing by the terminal device.

In some embodiments, if the terminal device receives no first indication information, the terminal device determines that the resource in the non-active period of the cell DTX is available for transmission of the downlink common channel or signal, and/or determines that the uplink common resource in the non-active period of the cell DRX is available for transmission of the uplink channel or signal.

In the above method, when the terminal device receives no first indication information, the terminal device may directly determine that a transmission resource in a non-active period is available. That is, in the above method, the reception of the first indication information is continuous. Therefore, when the transmission of the first indication information is discontinued, the terminal device can quickly determine that the transmission resource is available, thereby improving the timeliness of transmission of certain specific messages such as updated SI.

In some embodiments, if the terminal device receives no first indication information, a behavior of the terminal device is not changed. That is, if it is previously determined that the resource in the non-active period of the cell DTX is available for transmission of the downlink common channel or signal, and/or it is previously determined that the uplink common resource in the non-active period of the cell DRX is available for transmission of the uplink channel or signal, then it is still determined that the resource in the non-active period of the cell DTX is available for transmission of the downlink common channel or signal, and/or it is still determined that the uplink common resource in the non-active period of the cell DRX is available for transmission of the uplink channel or signal. If it is previously determined that the resource in the non-active period of the cell DTX is unavailable for transmission of the downlink common channel or signal, and/or it is previously determined that the uplink common resource in the non-active period of the cell DRX is unavailable for transmission of the uplink channel or signal, then it is still determined that the resource in the non-active period of the cell DTX is unavailable for transmission of the downlink common channel or signal, and/or it is still determined that the uplink common resource in the non-active period of the cell DRX is unavailable for transmission of the uplink channel or signal.

In the above method, when the terminal device receives no first indication information, a behavior of the terminal device remains unchanged for a transmission resource in a non-active period. That is, if the terminal device receives no first indication information, no additional processing is required, thereby making the implementation simple.

In some embodiments, the first indication information is used for determining whether an SI update is triggered. In some embodiments, the first indication information is carried in a second PDCCH format, the second PDCCH format is scrambled by a P-RNTI, and the P-RNTI is an RNTI for scheduling of a paging message. Alternatively, the first indication information is carried in a third PDCCH format, the third PDCCH format is scrambled by a PEI-RNTI, and the PEI-RNTI is an RNTI for early indication of a paging message.

In some embodiments, in the case where that the terminal device determines, according to the first indication information, that the SI update is triggered, the terminal device determines that the resource in the non-active period of the cell DTX is available for transmission of the downlink common channel or signal.

In some embodiments, when a short message indicator field in the second PDCCH format indicates "10" or "11", it indicates triggering of the SI update, and the terminal device determines that the resource in the non-active period of the cell DTX is available for transmission of the downlink common channel or signal.

In some embodiments, when a short message indicator field in the second PDCCH format indicates "10" or "11", and a short message field in the second PDCCH format indicates "1" or "2" or "4", it indicates triggering of the SI update, and the terminal device determines that the resource in the non-active period of the cell DTX is available for transmission of the downlink common channel or signal.

In some embodiments, when a short message field in the second PDCCH format indicates "1" or "2" or "4", it indicates triggering of the SI update, and the terminal device determines that the resource in the non-active period of the cell DTX is available for transmission of the downlink common channel or signal.

That is, in a scenario of SI change, to enable the terminal device to obtain updated SI as soon as possible, the network device is not affected by the configured cell DTX when transmitting the SI, that is, the network device may still transmit the SI on a time-domain resource in the non-active period of the cell DTX.

Exemplarily, as illustrated in FIG. 7, a first cell is configured with cell DTX through SI, a network device normally transmits SI in the first cell in an active period of the cell DTX, and the network device does not transmit the SI in the first cell in a non-active period of the cell DTX. When the network device needs to update the SI in the first cell, the network device indicates change of the SI in the first cell to a terminal device via a PDCCH scrambled by a P-RNTI. After receiving an SI change message (i.e., first indication information), the terminal device determines that a resource in the non-active period of the cell DTX is available for transmission of a downlink common channel or signal. That is, in the non-active period of the cell DTX, the terminal device may receive the SI in the first cell transmitted by the network device.

As can be seen, by using the above method, the terminal device can also quickly obtain the updated SI in a scenario of network energy saving, thereby improving network communication performance.

In some embodiments, in the case where the terminal device determines, according to the first indication information, that the SI update is triggered, the terminal device determines that the uplink common resource in the non-active period of the cell DRX is available for transmission of the uplink channel or signal.

In some embodiments, validity time of the first indication information is determined according to time at which the first indication information is received.

In some embodiments, validity time of the first indication information is the first time unit after a length of delay time since reception of the first indication information. The unit of a time unit may be a slot, a subframe, or a symbol. The length of delay time is pre-defined or configured by the network device. For example, the value of the length of delay time is illustrated in table 1, and the SCS in table 1 corresponds to a channel carrying the first indication information.

As an example, the validity time of the first indication information is determined in the same manner as the validity time of DCI format 2_9, which will not be repeated herein.

In some embodiments, the downlink common channel or signal includes one or more of: an SSB, SIB1, first SI, second SI, a PDCCH scheduling SIB1, a channel state information-reference signal (CSI-RS), a TRS, or a positioning reference signal (PRS). The first SI includes SIB6, SIB7, and SIB8, and the second SI includes other SI except SIB6, SIB7, and SIB8.

In some embodiments, the uplink channel or signal includes one or more of: a PRACH or message A (MsgA).

In some embodiments, the downlink common channel or signal further includes one or more of: a paging message, a PDCCH scheduling the paging message, or a PEI.

In some embodiments, the downlink common channel or signal does not include one or more of: a paging message, a PDCCH scheduling the paging message, or a PEI. It may be understood that, a terminal device in an idle state or inactive state also needs to monitor or receive a paging-related message (for example, the paging message, and/or the PDCCH scheduling the paging message, and/or PEI information). For example, when the terminal device in the idle state or inactive state is paged, the network device needs to notify the terminal device through a paging-related message. Therefore, in order to avoid an impact on the implementation of the terminal device in the idle state or inactive state, in some cases, the downlink common channel or signal may not include the paging-related message. In other words, a time-domain resource in the non-active period of the cell DTX is available for transmission of the paging-related message, i.e., the paging-related message is not affected by the configuration of the cell DTX.

In some embodiments, the first indication information is transmitted on a resource in the first cell.

In some embodiments, the first indication information is transmitted on a resource in a second cell. The second cell is different from the first cell.

According to the technical solutions provided in embodiments of the disclosure, after determining the configuration of the cell DTX and/or the configuration of the cell DRX on the first cell, the terminal device determines, according to the first indication information, whether the resource in the non-active period of the cell DTX is available for transmission of the downlink common channel or signal, and/or determines, according to the first indication information, whether the uplink common resource in the non-active period of the cell DRX is available for transmission of the uplink channel or signal. As such, in the non-active period of the cell DTX and/or the non-active period of the cell DRX, certain specific messages can still be timely transmitted. In a scenario of network energy saving, network communication performance can be improved.

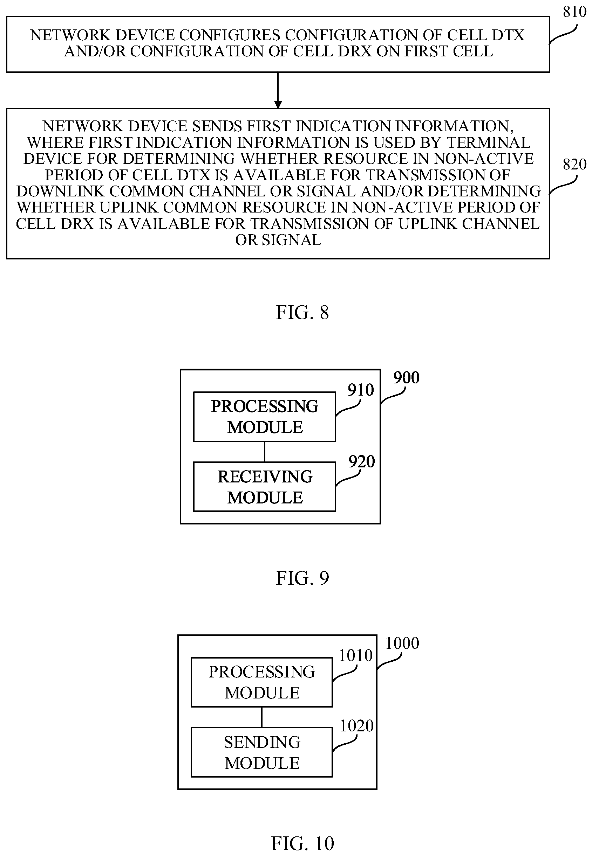

Reference is made to FIG. 8 which is a flowchart of a wireless communication method provided in another embodiment of the disclosure. An execution body of each operation in the method is a network device. The method may include at least one of operations at 810 and 820.

At 810, a network device configures a configuration of cell DTX and/or a configuration of cell DRX on a first cell.

In some embodiments, the network device configures the configuration of the cell DTX and/or the configuration of the cell DRX on the first cell according to SI.

At 820, the network device sends first indication information, where the first indication information is used by a terminal device for determining whether a resource in a non-active period of the cell DTX is available for transmission of a downlink common channel or signal and/or determining whether an uplink common resource in a non-active period of the cell DRX is available for transmission of an uplink channel or signal.

In some embodiments, the network device corresponding to the first cell sends the first indication information, and the terminal device receives the first indication information.

In some embodiments, a network device corresponding to a second cell sends the first indication information, and the terminal device receives the first indication information. The second cell is different from the first cell.

In some embodiments, the first indication information indicates that the cell DTX and/or the cell DRX is to be activated or de-activated. The first indication information includes a first bit and/or a second bit.

In some embodiments, the first indication information includes the first bit and the second bit. When the cell DTX is configured, the first bit indicates that the cell DTX is to be activated or de-activated. When the cell DRX is configured, the second bit indicates that the cell DRX is to be activated or de-activated.

In some embodiments, the first indication information includes the first bit and the second bit. When only the cell DTX is configured, the first bit indicates that the cell DTX is to be activated or de-activated. When only the cell DRX is configured, the first bit indicates that the cell DRX is to be activated or de-activated. When both the cell DTX and the cell DRX are configured, the first bit indicates that the cell DTX is to be activated or de-activated, and the second bit indicates that the cell DRX is to be activated or de-activated.

In some embodiments, the first indication information includes the first bit. When only the cell DTX is configured, the first bit indicates that the cell DTX is to be activated or de-activated. When only the cell DRX is configured, the first bit indicates that the cell DRX is to be activated or de-activated. When both the cell DTX and the cell DRX are configured, the first bit indicates that the cell DTX and the cell DRX are to be activated or de-activated.

In some embodiments, the network device configures a first RNTI. The first RNTI is used for scrambling a first PDCCH format, and the first indication information is carried in the first PDCCH format.

In some embodiments, the network device configures a first CSS set. The first PDCCH format is transmitted through the first CSS set.

In some embodiments, the first indication information is carried in a second PDCCH format, the second PDCCH format is scrambled by a P-RNTI, and the P-RNTI is an RNTI for scheduling of a paging message.

In some embodiments, the first indication information is a separate information field in the second PDCCH format

In some embodiments, an information field in the second PDCCH format is reused for the first indication information.

In some embodiments, at least one bit in the first indication information is carried in a short message field in the second PDCCH format

In some embodiments, when a short message indicator field in the second PDCCH format indicates that a short message is present in the second PDCCH format, at least one bit in the first indication information is carried in a short message field in the second PDCCH format.

In some embodiments, at least one bit in the first indication information may be determined by the terminal device, based on configuration information of the network device, to be carried in a short message field in the second PDCCH format. In some embodiments, the network device sends the configuration information, and the terminal device receives the configuration information. The configuration information may be any configuration information of the network device, for example, the system configuration information and the first configuration information in the above embodiments.

In some embodiments, the first bit is bit 5 in the short message field.

In some embodiments, the second bit is bit 6 in the short message field.

In some embodiments, the first indication information is carried in a third PDCCH format, the third PDCCH format is scrambled by a PEI-RNTI, and the PEI-RNTI is an RNTI for early indication of a paging message.

In some embodiments, the network device configures a position of a start bit in the first indication information in the third PDCCH format.

In some embodiments, the first indication information is used for determining whether an SI update is triggered. In some embodiments, the first indication information is carried in a second PDCCH format, the second PDCCH format is scrambled by a P-RNTI, and the P-RNTI is an RNTI for scheduling of a paging message. In some embodiments, the first indication information is carried in a third PDCCH format, the third PDCCH format is scrambled by a PEI-RNTI, and the PEI-RNTI is an RNTI for early indication of a paging message.

In some embodiments, the downlink common channel or signal includes one or more of: an SSB, SIB1, first SI, second SI, a PDCCH scheduling SIB1, a CSI-RS, a TRS, or a PRS. The first SI includes SIB6, SIB7, and SIB8, and the second SI includes other SI except SIB6, SIB7, and SIB8.

In some embodiments, the uplink channel or signal includes one or more of: a PRACH or MsgA.

In some embodiments, the first indication information is transmitted on a resource in the first cell

In some embodiments, the first indication information is transmitted on a resource in a second cell. The second cell is different from the first cell.

It may be noted that, in the above method embodiments, the operations performed by the terminal device may be separately implemented as a wireless communication method at a terminal device side, and the operations performed by the network device may be separately implemented as a wireless communication method at a network device side. For details not disclosed in embodiments at any side, reference can be made to embodiments at the other side.

Apparatus embodiments of the disclosure will be described below. For details not elaborated in the apparatus embodiments of the disclosure, reference can be made to the method embodiments of the disclosure.

Reference is made to FIG. 9 which is a block diagram of a wireless communication apparatus provided in an embodiment of the disclosure. The apparatus has a function of implementing the above wireless communication method at the terminal device side. The function may be implemented by hardware, or may be implemented by hardware executing corresponding software. The apparatus may be the terminal device described above, or may be disposed in the terminal device. As illustrated in FIG. 9, the apparatus 900 may include a processing module 910.

The processing module 910 is configured to determine a configuration of cell DTX and/or a configuration of cell DRX on a first cell. The processing module 910 is further configured to determine, according to first indication information, whether a resource in a non-active period of the cell DTX is available for transmission of a downlink common channel or signal, and/or determine, according to the first indication information, whether an uplink common resource in a non-active period of the cell DRX is available for transmission of an uplink channel or signal.

In some embodiments, the first indication information indicates that the cell DTX and/or the cell DRX is to be activated or de-activated. The first indication information includes a first bit and/or a second bit.

In some embodiments, the first indication information includes the first bit and the second bit. The first indication information indicating that the cell DTX and/or the cell DRX is to be activated or de-activated includes: when the cell DTX is configured, the first bit indicating that the cell DTX is to be activated or de-activated; and/or when the cell DRX is configured, the second bit indicating that the cell DRX is to be activated or de-activated.

In some embodiments, the first indication information includes the first bit and the second bit. The first indication information indicating that the cell DTX and/or the cell DRX is to be activated or de-activated includes: when only the cell DTX is configured, the first bit indicating that the cell DTX is to be activated or de-activated; or when only the cell DRX is configured, the first bit indicating that the cell DRX is to be activated or de-activated; or when both the cell DTX and the cell DRX are configured, the first bit indicating that the cell DTX is to be activated or de-activated, and the second bit indicating that the cell DRX is to be activated or de-activated.

In some embodiments, the first indication information includes the first bit. The first indication information indicating that the cell DTX and/or the cell DRX is to be activated or de-activated includes: when only the cell DTX is configured, the first bit indicating that the cell DTX is to be activated or de-activated; or when only the cell DRX is configured, the first bit indicating that the cell DRX is to be activated or de-activated; or when both the cell DTX and the cell DRX are configured, the first bit indicating that the cell DTX and the cell DRX are to be activated or de-activated.

In some embodiments, the first indication information is carried in a first PDCCH format, the first PDCCH format is scrambled by a first RNTI, and the first RNTI is configured by a network device.

In some embodiments, the first PDCCH format is transmitted through a first CSS set, and the first CSS set is configured by the network device.

In some embodiments, as illustrated in FIG. 9, the apparatus 900 further includes a receiving module 920.

The receiving module 920 is configured to monitor, through a first CSS set, the first PDCCH format in the non-active period of the cell DTX; or skip monitoring of the first PDCCH format in the non-active period of the cell DTX.

In some embodiments, the first indication information is carried in a second PDCCH format, the second PDCCH format is scrambled by a P-RNT), and the P-RNTI is an RNTI for scheduling of a paging message.

In some embodiments, the first indication information being carried in the second PDCCH format includes: the first indication information being a separate information field in the second PDCCH format; or an information field in the second PDCCH format being reused for the first indication information.

In some embodiments, the first indication information being carried in the second PDCCH format includes: at least one bit in the first indication information being carried in a short message field in the second PDCCH format; or at least one bit in the first indication information being carried in a short message field in the second PDCCH format, when a short message indicator field in the second PDCCH format indicates that a short message is present in the second PDCCH format; or at least one bit in the first indication information being determined, based on configuration information of a network device, to be carried in a short message field in the second PDCCH format.

In some embodiments, the first bit is bit 5 in the short message field; and/or the second bit is bit 6 in the short message field.

In some embodiments, the first indication information is carried in a third PDCCH format, the third PDCCH format is scrambled by a PEI-RNTI, and the PEI-RNTI is an RNTI for early indication of a paging message.

In some embodiments, a position of a start bit in the first indication information in the third PDCCH format is configured by a network device.

In some embodiments, the processing module 910 is configured to determine that the resource in the non-active period of the cell DTX is unavailable for transmission of the downlink common channel or signal, when the first indication information indicates that the cell DTX is to be activated. The processing module 910 is further configured to determine that the resource in the non-active period of the cell DTX is available for transmission of the downlink common channel or signal, when the first indication information indicates that the cell DTX is to be de-activated. The processing module 910 is further configured to determine that the uplink common resource in the non-active period of the cell DRX is unavailable for transmission of the uplink channel or signal, when the first indication information indicates that the cell DRX is to be activated. The processing module 910 is further configured to determine that the uplink common resource in the non-active period of the cell DRX is available for transmission of the uplink channel or signal, when the first indication information indicates that the cell DRX is to be de-activated.

In some embodiments, the processing module 910 is further configured to: when the terminal device receives no first indication information, determine that the resource in the non-active period of the cell DTX is unavailable for transmission of the downlink common channel or signal, and/or determine that the uplink common resource in the non-active period of the cell DRX is unavailable for transmission of the uplink channel or signal.

In some embodiments, the processing module 910 is further configured to: when the terminal device receives no first indication information, determine that the resource in the non-active period of the cell DTX is available for transmission of the downlink common channel or signal, and/or determine that the uplink common resource in the non-active period of the cell DRX is available for transmission of the uplink channel or signal.

In some embodiments, the first indication information is used for determining whether an SI update is triggered.

In some embodiments, the processing module 910 is configured to determine that the resource in the non-active period of the cell DTX is available for transmission of the downlink common channel or signal, when determining, according to the first indication information, that the SI update is triggered.

In some embodiments, the processing module 910 is configured to determine that the uplink common resource in the non-active period of the cell DRX is available for transmission of the uplink channel or signal, when determining, according to the first indication information, that the SI update is triggered.

In some embodiments, the first indication information is carried in a second PDCCH format, the second PDCCH format is scrambled by a P-RNTI, and the P-RNTI is an RNTI for scheduling of a paging message.

In some embodiments, the first indication information is carried in a third PDCCH format, the third PDCCH format is scrambled by a PEI-RNTI, and the PEI-RNTI is an RNTI for early indication of a paging message.

In some embodiments, the processing module 910 is configured to determine the configuration of the cell DTX and/or the configuration of the cell DRX on the first cell according to SI.

In some embodiments, the downlink common channel or signal includes one or more of: an SSB, SIB1, first SI, second SI, a PDCCH scheduling SIB1, a CSI-RS, a TRS, or a PRS. The first SI includes SIB6, SIB7, and SIB8, and the second SI includes other SI except SIB6, SIB7, and SIB8.

In some embodiments, the uplink channel or signal includes one or more of: a PRACH or MsgA.

In some embodiments, the first indication information is transmitted on a resource in the first cell. Alternatively, the first indication information is transmitted on a resource in a second cell, where the second cell is different from the first cell.

Reference is made to FIG. 10 which is a block diagram of a wireless communication apparatus provided in another embodiment of the disclosure. The apparatus has a function of implementing the above wireless communication method at the network device side. The function may be implemented by hardware, or may be implemented by hardware executing corresponding software. The apparatus may be the network device described above, or may be disposed in the network device. As illustrated in FIG. 10, the apparatus 1000 may include a processing module 1010 and a sending module 1020.

The processing module 1010 is configured to configure a configuration of cell DTX and/or a configuration of cell DRX on a first cell.

The sending module 1020 is configured to send first indication information, where the first indication information is used by a terminal device for determining whether a resource in a non-active period of the cell DTX is available for transmission of a downlink common channel or signal and/or determining whether an uplink common resource in a non-active period of the cell DRX is available for transmission of an uplink channel or signal.

In some embodiments, the first indication information indicates that the cell DTX and/or the cell DRX is to be activated or de-activated. The first indication information includes a first bit and/or a second bit.

In some embodiments, the first indication information includes the first bit and the second bit. The first indication information indicating that the cell DTX and/or the cell DRX is to be activated or de-activated includes: when the cell DTX is configured, the first bit indicating that the cell DTX is to be activated or de-activated; and/or when the cell DRX is configured, the second bit indicating that the cell DRX is to be activated or de-activated.

In some embodiments, the first indication information includes the first bit and the second bit. The first indication information indicating that the cell DTX and/or the cell DRX is to be activated or de-activated includes: when only the cell DTX is configured, the first bit indicating that the cell DTX is to be activated or de-activated; or when only the cell DRX is configured, the first bit indicating that the cell DRX is to be activated or de-activated; or when both the cell DTX and the cell DRX are configured, the first bit indicating that the cell DTX is to be activated or de-activated, and the second bit indicating that the cell DRX is to be activated or de-activated.

In some embodiments, when only the cell DTX is configured, the first bit indicates that the cell DTX is to be activated or de-activated. Alternatively, when only the cell DRX is configured, the first bit indicates that the cell DRX is to be activated or de-activated. Alternatively, when both the cell DTX and the cell DRX are configured, the first bit indicates that the cell DTX and the cell DRX are to be activated or de-activated.

In some embodiments, the processing module 1010 is further configured to configure a first RNTI, where the first RNTI is used for scrambling a first PDCCH format, and the first indication information is carried in the first PDCCH format.

In some embodiments, the processing module 1010 is further configured to configure a first CSS set, where the first PDCCH format is transmitted through the first CSS set.

In some embodiments, the first indication information is carried in a second PDCCH format, the second PDCCH format is scrambled by a P-RNTI, and the P-RNTI is an RNTI for scheduling of a paging message.

In some embodiments, the first indication information is a separate information field in the second PDCCH format. Alternatively, an information field in the second PDCCH format is reused for the first indication information.

In some embodiments, at least one bit in the first indication information is carried in a short message field in the second PDCCH format. Alternatively, when a short message indicator field in the second PDCCH format indicates that a short message is present in the second PDCCH format, at least one bit in the first indication information is carried in a short message field in the second PDCCH format. Alternatively, at least one bit in the first indication information is determined, based on configuration information of the network device, to be carried in a short message field in the second PDCCH format.

In some embodiments, the first bit is bit 5 in the short message field; and/or, the second bit is bit 6 in the short message field.

In some embodiments, the first indication information is carried in a third PDCCH format, the third PDCCH format is scrambled by a PEI-RNTI, and the PEI-RNTI is an RNTI for early indication of a paging message.

In some embodiments, the processing module 1010 is further configured to configure a position of a start bit in the first indication information in the third PDCCH format.

In some embodiments, the first indication information is used for determining whether an SI update is triggered.

In some embodiments, the first indication information is carried in a second PDCCH format, the second PDCCH format is scrambled by a P-RNTI, and the P-RNTI is an RNTI for scheduling of a paging message.

In some embodiments, the first indication information is carried in a third PDCCH format, the third PDCCH format is scrambled by a PEI-RNTI, and the PEI-RNTI is an RNTI for early indication of a paging message.

In some embodiments, the processing module 1010 is configured to configure the configuration of the cell DTX and/or the configuration of the cell DRX on the first cell according to SI.

In some embodiments, the downlink common channel or signal includes one or more of: an SSB, SIB1, first SI, second SI, a PDCCH scheduling SIB1, a CSI-RS, a TRS, or a PRS. The first SI includes SIB6, SIB7, and SIB8, and the second SI includes other SI except SIB6, SIB7, and SIB8.

In some embodiments, the uplink channel or signal includes one or more of: a PRACH or MsgA.

In some embodiments, the first indication information is transmitted on a resource in the first cell; or, the first indication information is transmitted on a resource in a second cell, where the second cell is different from the first cell.

It may be noted that, when the apparatus provided in the above embodiments implements its functions, only the division into the above functional modules is taken an example for illustration. In practice, the above functions can be allocated to different functional modules according to actual needs, that is, the structure of the device is divided into different functional modules to complete all or part of the functions described above.

Regarding the apparatus in the above embodiments, the manner in which each module performs operations has been described in detail in the related method embodiments and thus will not be elaborated again herein. For details not elaborated in the apparatus embodiments, reference can be made to the above method embodiments.

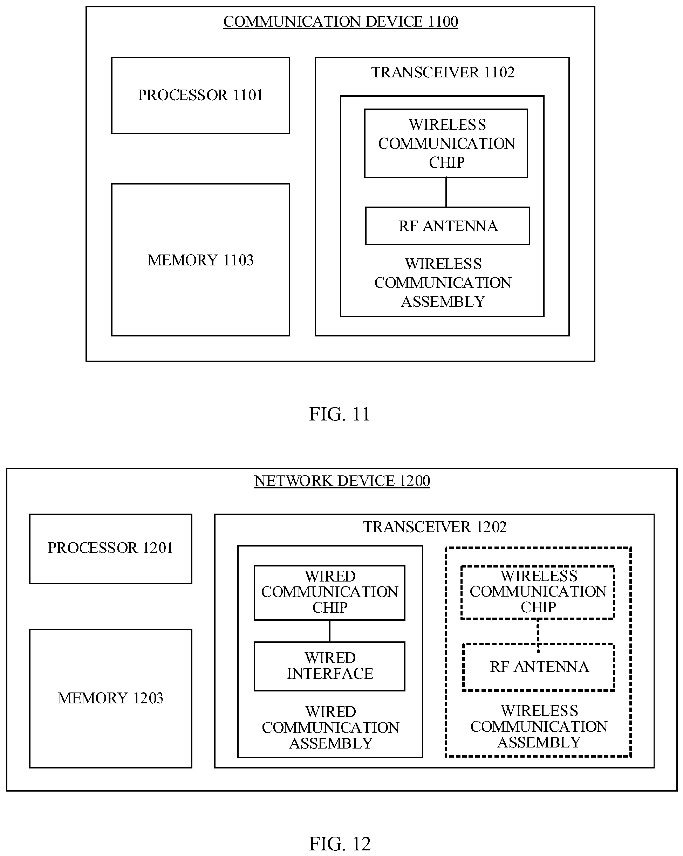

Reference is made to FIG. 11 which is a schematic structural diagram of a terminal device provided in an embodiment of the disclosure. The terminal device 1100 may be configured to perform the method steps performed by the terminal device in the above embodiments. The terminal device 1100 may include a processor 1101, a transceiver 1102, and a memory 1103. The processor 1101 may be configured to implement the functions of the above processing module 910, and may be configured to control transmission and/or reception. The transceiver 1102 may be configured to implement the functions of transmission and/or reception, for example, the functions of the above receiving module 920.

The processor 1101 includes one or more processing cores, and the processor 1101 executes various function applications and information processing by running software programs and modules.

The transceiver 1102 may include a receiver and a transmitter. For example, the receiver and the transmitter may be implemented as the same wireless communication assembly, and the wireless communication assembly may include a wireless communication chip and a radio frequency (RF) antenna.

The memory 1103 may be connected to the processor 1101 and the transceiver 1102.

The memory 1103 may be configured to store a computer program executed by the processor. The processor 901 is configured to execute the computer program, so as to implement various steps in the above method embodiments.

In addition, the memory 1103 may be implemented by any type of volatile storage device or non-volatile storage device or a combination thereof. The volatile storage device or non-volatile storage device includes, but is not limited to, a magnetic disk or an optical disk, an electrically erasable programmable read-only memory (ROM), an erasable programmable ROM, a static random-access memory (RAM), an ROM, a magnetic memory, a flash memory, and a programmable ROM.

In some embodiments, the processor 1101 is configured to determine a configuration of cell DTX and/or a configuration of cell DRX on a first cell; and determine, according to first indication information, whether a resource in a non-active period of the cell DTX is available for transmission of a downlink common channel or signal, and/or determine, according to the first indication information, whether an uplink common resource in a non-active period of the cell DRX is available for transmission of an uplink channel or signal.

For details not elaborated in the embodiment, reference can be made to the above embodiments, which will not be repeated herein.

Reference is made to FIG. 12 which is a schematic structural diagram of a network device provided in an embodiment of the disclosure. The network device 1200 may be configured to perform the method steps performed by the network device in the above embodiments. The network device 1200 may include a processor 1201, a transceiver 1202, and a memory 1203. The processor 1201 may be configured to implement the functions of the above processing module 1010, and may be configured to control transmission and/or reception. The transceiver 1202 may be configured to implement the functions of transmission and/or reception, for example, the functions of the above receiving module 1020.

The processor 1201 includes one or more processing cores, and the processor 1201 executes various function applications and information processing by running software programs and modules.

The transceiver 1202 may include a receiver and a transmitter. For example, the transceiver 1202 may include a wired communication assembly, and the wired communication assembly may include a wired communication chip and a wired interface (for example, a fiber interface). Optionally, the transceiver 1202 may also include a wireless communication assembly, and the wireless communication assembly may include a wireless communication chip and an RF antenna.

The memory 1203 may be connected to the processor 1201 and the transceiver 1202.

The memory 1203 may be configured to store a computer program executed by the processor. The processor 1201 is configured to execute the computer program, so as to implement various steps performed by the network device in the above method embodiments.

In addition, the memory 1203 may be implemented by any type of volatile storage device or non-volatile storage device or a combination thereof. The volatile storage device or non-volatile storage device includes, but is not limited to, a magnetic disk or an optical disk, an electrically erasable programmable ROM, an erasable programmable ROM, a static RAM, an ROM, a magnetic memory, a flash memory, and a programmable ROM.

In some embodiments, the processor 1201 is configured to configure a configuration of cell DTX and/or a configuration of cell DRX on a first cell. The transceiver 1202 is configured to send first indication information, where the first indication information is used by a terminal device for determining whether a resource in a non-active period of the cell DTX is available for transmission of a downlink common channel or signal and/or determining whether an uplink common resource in a non-active period of the cell DRX is available for transmission of an uplink channel or signal.

For details not elaborated in the embodiment, reference can be made to the above embodiments, which will not be repeated herein.

A computer-readable storage medium is further provided in embodiments of the disclosure. The storage medium is configured to store a computer program which is executed by a processor to implement the above wireless communication method at a terminal device side or the above wireless communication method at a network device side. In some embodiments, the computer-readable storage medium may include an ROM, an RAM, a solid state drive (SSD), or an optical disk. The RAM may include a resistance RAM (ReRAM) and a dynamic RAM (DRAM).

A chip is further provided in embodiments of the disclosure. The chip includes programmable logic circuits and/or program instructions. The chip is configured to, when running, implement the above wireless communication method at a terminal device side or the above wireless communication method at a network device side.

A computer program product is further provided in embodiments of the disclosure. The computer program product includes a computer program which is stored in a computer-readable storage medium. The computer program is configured to be read by a processor from the computer-readable storage medium to execute the computer program to implement the above wireless communication method at a terminal device side or the above wireless communication method at a network device side.

It may be understood that, "indication" referred to in embodiments of the disclosure may be a direct indication, may be an indirect indication, or may mean that there is an association. For example, *A* indicates *B* may mean that *A* directly indicates *B,* for instance, *B* can be obtained according to *A*; may mean that *A* indirectly indicates *B,* for instance, *A* indicates *C*, and *B* can be obtained according to *C*; or may mean that that there is an association between *A* and*B*.

In the elaborations of embodiments of the disclosure, the term "correspondence" may mean that there is a direct or indirect correspondence between the two, may mean that there is an association between the two, or may mean a relationship of indicating and being indicated or configuring and being configured, etc.

In some embodiments of the disclosure, the "pre-defined" can be implemented by pre-saving a corresponding code or table in a device (for example, including the terminal device and the network device) or in other manners that can be used for indicating related information, and the disclosure is not limited in this regard. For example, the "pre-defined" may mean defined in a protocol.

In some embodiments of the disclosure, the "protocol" may refer to a communication standard protocol, which may include, for example, an LTE protocol, an NR protocol, and a protocol applied to a future communication system, and the disclosure is not limited in this regard.

The "multiple" referred to herein refers to two or more than two. The "and/or" describes an association between associated objects, which means that there may be three relationships. For example, *A* and/or *B* may mean *A* alone, both *A* and *B* exist, and *B* alone. The character "/" generally indicates that the associated objects are in an "or" relationship.

The "greater than or equal to" referred to herein may refer to "greater than or equal to" or "greater than". The "less than or equal to" may refer to "less than or equal to" or "less than".

In addition, the serial numbers of the steps described herein merely exemplarily illustrate a possible execution order between the steps. In some other embodiments, the above steps may not be executed according to the order of the serial numbers, for example, two steps with different serial numbers are performed simultaneously, or two steps with different serial numbers are performed in an order opposite to that illustrated in the figure, and embodiments of the disclosure are not limited in this regard.

Those skilled in the art may appreciate that, in one or more of the above examples, the functions described in the embodiments of the disclosure may be implemented by hardware, software, firmware, or any combination thereof. When implemented by software, the functions may be stored in a computer-readable medium or transmitted as one or more instructions or codes on a computer-readable medium. The computer-readable medium includes a computer storage medium and a communication medium, where the communication medium includes any medium that facilitates transfer of computer programs from one place to another, and the storage medium may be any usable medium that can be accessed by a general purpose computer or a special purpose computer.

The foregoing elaborations are merely exemplary embodiments of the disclosure, but are not intended to limit the disclosure. Any modification, equivalent replacement, and improvement made within the spirit and principle of the disclosure shall belong to the protection scope of the disclosure.

## Claims

1. A wireless communication method, performed by a terminal device and comprising:
determining a configuration of cell discontinuous transmission (DTX) and/or a configuration of cell discontinuous reception (DRX) on a first cell; and
determining, according to first indication information, whether a resource in a non-active period of the cell DTX is available for transmission of a downlink common channel or signal, and/or determining, according to the first indication information, whether an uplink common resource in a non-active period of the cell DRX is available for transmission of an uplink channel or signal.

2. The method of claim 1, wherein the first indication information indicates that the cell DTX and/or the cell DRX is to be activated or de-activated, wherein the first indication information comprises a first bit and/or a second bit.

3. The method of claim 2, wherein the first indication information comprises the first bit and the second bit, and the first indication information indicating that the cell DTX and/or the cell DRX is to be activated or de-activated comprises:
when the cell DTX is configured, the first bit indicating that the cell DTX is to be activated or de-activated; and/or
when the cell DRX is configured, the second bit indicating that the cell DRX is to be activated or de-activated.

4. The method of claim 2, wherein the first indication information comprises the first bit and the second bit, and the first indication information indicating that the cell DTX and/or the cell DRX is to be activated or de-activated comprises:
when only the cell DTX is configured, the first bit indicating that the cell DTX is to be activated or de-activated; or
when only the cell DRX is configured, the first bit indicating that the cell DRX is to be activated or de-activated; or
when both the cell DTX and the cell DRX are configured, the first bit indicating that the cell DTX is to be activated or de-activated, and the second bit indicating that the cell DRX is to be activated or de-activated.

5. The method of claim 2, wherein the first indication information comprises the first bit, and the first indication information indicating that the cell DTX and/or the cell DRX is to be activated or de-activated comprises:
when only the cell DTX is configured, the first bit indicating that the cell DTX is to be activated or de-activated; or
when only the cell DRX is configured, the first bit indicating that the cell DRX is to be activated or de-activated; or
when both the cell DTX and the cell DRX are configured, the first bit indicating that the cell DTX and the cell DRX are to be activated or de-activated.

6. The method of any one of claims 1 to 5, wherein the first indication information is carried in a first physical downlink control channel (PDCCH) format, the first PDCCH format is scrambled by a first radio network temporary identifier (RNTI), and the first RNTI is configured by a network device.

7. The method of claim 6, wherein the first PDCCH format is transmitted through a first common search space (CSS) set, and the first CSS set is configured by the network device.

8. The method of claim 6 or 7, further comprising:
monitoring, through a first CSS set, the first PDCCH format in the non-active period of the cell DTX; or
skipping monitoring of the first PDCCH format in the non-active period of the cell DTX.

9. The method of any one of claims 1 to 5, wherein the first indication information is carried in a second PDCCH format, the second PDCCH format is scrambled by a paging-RNTI (P-RNTI), and the P-RNTI is an RNTI for scheduling of a paging message.

10. The method of claim 9, wherein the first indication information being carried in the second PDCCH format comprises:
the first indication information being a separate information field in the second PDCCH format; or
an information field in the second PDCCH format being reused for the first indication information.

11. The method of claim 9 or 10, wherein the first indication information being carried in the second PDCCH format comprises:
at least one bit in the first indication information being carried in a short message field in the second PDCCH format; or
at least one bit in the first indication information being carried in a short message field in the second PDCCH format, when a short message indicator field in the second PDCCH format indicates that a short message is present in the second PDCCH format; or
at least one bit in the first indication information being determined, based on configuration information of a network device, to be carried in a short message field in the second PDCCH format.

12. The method of claim 11, wherein
the first bit is bit 5 in the short message field; and/or
the second bit is bit 6 in the short message field.

13. The method of any one of claims 1 to 5, wherein the first indication information is carried in a third PDCCH format, the third PDCCH format is scrambled by a paging early indication-RNTI (PEI-RNTI), and the PEI-RNTI is an RNTI for early indication of a paging message.

14. The method of claim 13, wherein a position of a start bit in the first indication information in the third PDCCH format is configured by a network device.

15. The method of any one of claims 1 to 14, wherein determining, according to the first indication information, whether the resource in the non-active period of the cell DTX is available for transmission of the downlink common channel or signal, and/or determining, according to the first indication information, whether the uplink common resource in the non-active period of the cell DRX is available for transmission of the uplink channel or signal comprises at least one of:
determining that the resource in the non-active period of the cell DTX is unavailable for transmission of the downlink common channel or signal, when the first indication information indicates that the cell DTX is to be activated;
determining that the resource in the non-active period of the cell DTX is available for transmission of the downlink common channel or signal, when the first indication information indicates that the cell DTX is to be de-activated;
determining that the uplink common resource in the non-active period of the cell DRX is unavailable for transmission of the uplink channel or signal, when the first indication information indicates that the cell DRX is to be activated; and
determining that the uplink common resource in the non-active period of the cell DRX is available for transmission of the uplink channel or signal, when the first indication information indicates that the cell DRX is to be de-activated.

16. The method of any one of claims 1 to 15, further comprising:
when the terminal device receives no first indication information, determining that the resource in the non-active period of the cell DTX is unavailable for transmission of the downlink common channel or signal, and/or determining that the uplink common resource in the non-active period of the cell DRX is unavailable for transmission of the uplink channel or signal.

17. The method of any one of claims 1 to 15, further comprising:
when the terminal device receives no first indication information, determining that the resource in the non-active period of the cell DTX is available for transmission of the downlink common channel or signal, and/or determining that the uplink common resource in the non-active period of the cell DRX is available for transmission of the uplink channel or signal.

18. The method of claim 1, wherein the first indication information is used for determining whether a system information (SI) update is triggered.

19. The method of claim 18, wherein determining, according to the first indication information, whether the resource in the non-active period of the cell DTX is available for transmission of the downlink common channel or signal comprises:
determining that the resource in the non-active period of the cell DTX is available for transmission of the downlink common channel or signal, when determining, according to the first indication information, that the SI update is triggered.

20. The method of claim 18, wherein determining, according to the first indication information, whether the uplink common resource in the non-active period of the cell DRX is available for transmission of the uplink channel or signal comprises:
determining that the uplink common resource in the non-active period of the cell DRX is available for transmission of the uplink channel or signal, when determining, according to the first indication information, that the SI update is triggered.

21. The method of any one of claims 18 to 20, wherein the first indication information is carried in a second PDCCH format, the second PDCCH format is scrambled by a P-RNTI, and the P-RNTI is an RNTI for scheduling of a paging message.

22. The method of any one of claims 18 to 20, wherein the first indication information is carried in a third PDCCH format, the third PDCCH format is scrambled by a PEI-RNTI, and the PEI-RNTI is an RNTI for early indication of a paging message.

23. The method of any one of claims 1 to 22, wherein determining the configuration of the cell DTX and/or the configuration of the cell DRX on the first cell comprises:
determining the configuration of the cell DTX and/or the configuration of the cell DRX on the first cell according to SI.

24. The method of any one of claims 1 to 23, wherein the downlink common channel or signal comprises one or more of: a synchronization signal (SS)/physical broadcast channel (PBCH) block (SSB), system information block 1 (SIB1), first SI, second SI, a PDCCH scheduling SIB1, a channel state information-reference signal (CSI-RS), a tracking reference signal (TRS), or a positioning reference signal (PRS), wherein the first SI comprises SIB6, SIB7, and SIB8, and the second SI comprises other SI except SIB6, SIB7, and SIB8.

25. The method of any one of claims 1 to 24, wherein the uplink channel or signal comprises one or more of: a physical random access channel (PRACH) or message A (MsgA).

26. The method of any one of claims 1 to 25, wherein
the first indication information is transmitted on a resource in the first cell; or
the first indication information is transmitted on a resource in a second cell, wherein the second cell is different from the first cell.

27. A wireless communication method, performed by a network device and comprising:
configuring a configuration of cell discontinuous transmission (DTX) and/or a configuration of cell discontinuous reception (DRX) on a first cell; and
sending first indication information, wherein the first indication information is used by a terminal device for determining whether a resource in a non-active period of the cell DTX is available for transmission of a downlink common channel or signal and/or determining whether an uplink common resource in a non-active period of the cell DRX is available for transmission of an uplink channel or signal.

28. The method of claim 27, wherein the first indication information indicates that the cell DTX and/or the cell DRX is to be activated or de-activated, wherein the first indication information comprises a first bit and/or a second bit.

29. The method of claim 28, wherein the first indication information comprises the first bit and the second bit, and the first indication information indicating that the cell DTX and/or the cell DRX is to be activated or de-activated comprises:
when the cell DTX is configured, the first bit indicating that the cell DTX is to be activated or de-activated; and/or
when the cell DRX is configured, the second bit indicating that the cell DRX is to be activated or de-activated.

30. The method of claim 28, wherein the first indication information comprises the first bit and the second bit, and the first indication information indicating that the cell DTX and/or the cell DRX is to be activated or de-activated comprises:
when only the cell DTX is configured, the first bit indicating that the cell DTX is to be activated or de-activated; or
when only the cell DRX is configured, the first bit indicating that the cell DRX is to be activated or de-activated; or
when both the cell DTX and the cell DRX are configured, the first bit indicating that the cell DTX is to be activated or de-activated, and the second bit indicating that the cell DRX is to be activated or de-activated.

31. The method of claim 28, wherein the first indication information comprises the first bit, and the first indication information indicating that the cell DTX and/or the cell DRX is to be activated or de-activated comprises:
when only the cell DTX is configured, the first bit indicating that the cell DTX is to be activated or de-activated; or
when only the cell DRX is configured, the first bit indicating that the cell DRX is to be activated or de-activated; or
when both the cell DTX and the cell DRX are configured, the first bit indicating that the cell DTX and the cell DRX are to be activated or de-activated.

32. The method of any one of claims 27 to 31, further comprising:
configuring a first radio network temporary identifier (RNTI), wherein the first RNTI is used for scrambling a first physical downlink control channel (PDCCH) format, and the first indication information is carried in the first PDCCH format.

33. The method of claim 32, further comprising:
configuring a first common search space (CSS) set, wherein the first PDCCH format is transmitted through the first CSS set.

34. The method of any one of claims 27 to 31, wherein the first indication information is carried in a second PDCCH format, the second PDCCH format is scrambled by a paging-RNTI (P-RNTI), and the P-RNTI is an RNTI for scheduling of a paging message.

35. The method of claim 34, wherein the first indication information being carried in the second PDCCH format comprises:
the first indication information being a separate information field in the second PDCCH format; or
an information field in the second PDCCH format being reused for the first indication information.

36. The method of claim 33 or 34, wherein the first indication information being carried in the second PDCCH format comprises:
at least one bit in the first indication information being carried in a short message field in the second PDCCH format; or
at least one bit in the first indication information being carried in a short message field in the second PDCCH format, when a short message indicator field in the second PDCCH format indicates that a short message is present in the second PDCCH format; or
at least one bit in the first indication information being determined, based on configuration information of the network device, to be carried in a short message field in the second PDCCH format.

37. The method of claim 36, wherein
the first bit is bit 5 in the short message field; and/or
the second bit is bit 6 in the short message field.

38. The method of any one of claims 27 to 31, wherein the first indication information is carried in a third PDCCH format, the third PDCCH format is scrambled by a paging early indication-RNTI (PEI-RNTI), and the PEI-RNTI is an RNTI for early indication of a paging message.

39. The method of claim 38, further comprising:
configuring a position of a start bit in the first indication information in the third PDCCH format.

40. The method of claim 27, wherein the first indication information is used for determining whether a system information (SI) update is triggered.

41. The method of claim 40, wherein the first indication information is carried in a second PDCCH format, the second PDCCH format is scrambled by a P-RNTI, and the P-RNTI is an RNTI for scheduling of a paging message.

42. The method of claim 40, wherein the first indication information is carried in a third PDCCH format, the third PDCCH format is scrambled by a PEI-RNTI, and the PEI-RNTI is an RNTI for early indication of a paging message.

43. The method of any one of claims 27 to 42, wherein configuring the configuration of the cell DTX and/or the configuration of the cell DRX on the first cell comprises:
configuring the configuration of the cell DTX and/or the configuration of the cell DRX on the first cell according to SI.

44. The method of any one of claims 27 to 43, wherein the downlink common channel or signal comprises one or more of: a synchronization signal (SS)/physical broadcast channel (PBCH) block (SSB), system information block 1 (SIB1), first SI, second SI, a PDCCH scheduling SIB1, a channel state information-reference signal (CSI-RS), a tracking reference signal (TRS), or a positioning reference signal (PRS), wherein the first SI comprises SIB6, SIB7, and SIB8, and the second SI comprises other SI except SIB6, SIB7, and SIB8.

45. The method of any one of claims 27 to 44, wherein the uplink channel or signal comprises one or more of: a physical random access channel (PRACH) or message A (MsgA).

46. The method of any one of claims 27 to 45, wherein
the first indication information is transmitted on a resource in the first cell; or
the first indication information is transmitted on a resource in a second cell, wherein the second cell is different from the first cell.

47. A wireless communication apparatus, comprising:
a processing module configured to determine a configuration of cell discontinuous transmission (DTX) and/or a configuration of cell discontinuous reception (DRX) on a first cell;
the processing module being further configured to determine, according to first indication information, whether a resource in a non-active period of the cell DTX is available for transmission of a downlink common channel or signal, and/or determine, according to the first indication information, whether an uplink common resource in a non-active period of the cell DRX is available for transmission of an uplink channel or signal.

48. A wireless communication apparatus, comprising:
a processing module configured to configure a configuration of cell discontinuous transmission (DTX) and/or a configuration of cell discontinuous reception (DRX) on a first cell; and
a sending module configured to send first indication information, wherein the first indication information is used by a terminal device for determining whether a resource in a non-active period of the cell DTX is available for transmission of a downlink common channel or signal and/or determining whether an uplink common resource in a non-active period of the cell DRX is available for transmission of an uplink channel or signal.

49. A communication device, comprising:
a memory configured to store a computer program; and
a processor configured to execute the computer program to implement the method of any one of claims 1 to 26 or the method of any one of claims 27 to 46.

50. A computer-readable storage medium configured to store a computer program which is executed by a processor to implement the method of any one of claims 1 to 26 or the method of any one of claims 27 to 46.

51. A chip, comprising programmable logic circuits and/or program instructions, and when running, configured to implement the method of any one of claims 1 to 26 or the method of any one of claims 27 to 46.

52. A computer program product, comprising computer instructions which are stored in a computer-readable storage medium, wherein the computer instructions are configured to be read by a processor from the computer-readable storage medium to execute the computer instructions to implement the method of any one of claims 1 to 26 or the method of any one of claims 27 to 46.
